# EUROPEAN PATENT SPECIFICATION

(11) **EP 4 251 827 B1**
(45) Date of publication and mention of the grant of the patent: **16.10.2024**
(21) Application number: 21811363.7
(22) Date of filing: 19.11.2021
(51) Int. Cl.: E04G 3/32, E04G 3/30, F03D 80/50, E04G 3/24

(54) **TOWER GUIDE ARRANGEMENT FOR A WIND TURBINE BLADE ACCESS PLATFORM**
TURMFÜHRUNGSANORDNUNG FÜR EINE WINDTURBINENSCHAUFELZUGANGSPLATTFORM
AGENCEMENT DE GUIDAGE DE TOUR DESTINÉ À UNE PLATEFORME D'ACCÈS À UNE PALE D'ÉOLIENNE

(30) Priority: 26.11.2020 DK PA202070790
(43) Date of publication of application: 04.10.2023
(73) Proprietor: PP Energy ApS, 6430 Nordborg (DK)
(72) Inventor: JUNKER, Peter Moos, 6000 Kolding (DK); MARTENSEN, Lars, 6400 Sønderborg (DK); PEDERSEN, Jesper Ankjær, 6000 Kolding (DK)
(74) Representative: Keil & Schaafhausen Patentanwälte PartGmbB
(86) International application number: PCT/EP2021/082267
(87) International publication number: WO 2022/112121

(56) References cited:
- EP-A1- 2 693 045
- EP-A1- 2 693 045
- EP-A1- 3 404 169
- EP-A1- 3 404 169
- WO-A1-2011/161740
- WO-A1-2011/161740
- WO-A1-2017/191880
- WO-A1-2017/191880
- KR-B1- 101 486 713
- KR-B1- 101 486 713

## Description

### Field of the invention

The invention relates to a blade access arrangement for a rotor blade of a wind power plant having a tower, the arrangement comprising a platform having a number of sub-platforms moveably connected to each other by means of a connecting arrangement, tower guide means for guiding the platform against the tower, a bar arrangement connecting the platform with the tower guiding means and a hoisting arrangement for hoisting the blade access arrangement up and down.

### Background of the invention

From EP 1 604 108 B1, such a blade access arrangement is known, where sub-platforms are connected by means of swivel joints and surround an opening through which a rotor blade can be accommodated. When the shape of the platform is changed, the angular relation of the sub-platforms with respect to the rotor blade is changed.

WO 2009/121792 A2 discloses a suspendable maintenance platform for accessing a blade of a wind turbine. The platform includes arms for holding a maintenance unit, a frame onto which each arm is movably attached in a joint enabling planar movement, and means for supporting the frame in relation to the wind turbine tower. The maintenance unit is slidably attached to the arms that are configured for positioning the platform in relation to the blade, and wherein the frame is configured to be in close proximity to the turbine tower.

WO 2017/215711 A1 discloses an inspection device for a rotor blade having a maintenance chamber through which a rotor blade can pass vertically through a floor opening and a roof opening. The maintenance chamber is arranged on a supporting frame, and the supporting frame is connected to a bracing frame, which bracing frame can be supported on the tower of the wind turbine. By moving the bracing frame, and thereby the maintenance chamber, relative to the supporting frame it is possible to turn the maintenance chamber in relation to the rotor blade running through the maintenance platform.

The document WO2011161740 discloses a blade access arrangement according to the preamble of claim 1.

### Objective of the invention

The object of the invention is to provide a blade access arrangement where the platform can access the blade tip, which is positioned in a distance from the tower greater than other parts of the blade and where the platform can be manoeuvred in relation to the tower and the blade.

This object is solved by a blade access arrangement according to claim 1.

Hereby it is possible to change shape of the platform by changing the configuration of the sub-platforms in relation to each other. For example widening the shape of the platform.

In an embodiment, the displaceable connections are connected to each other by a drivetrain comprising a flexible member being flexible around its longitudinal axis and a pulley.

In alternative embodiments, the drivetrain can be one or more racks, belts, toothed belts, threaded spindles or combinations thereof.

Hereby it is possible to ensure a symmetrical movement of the displaceable connections, and thereby a position of the bar arrangement in relation to each other. For example it is possible to align a movement of a bar arrangement at one side of the platform with the movement of a bar arrangement at the other side of the platform in a mirrored way in relation to an axis in a radial direction from the tower.

The bar arrangement consist of a pair of telescopic lattice beams, which can comprise outer beams and inner beams which outer beams are capable of being displaced in beam guides in a longitudinal direction of the outer beams and in relation to the platform.

Hereby it is possible to provide a platform for a blade access arrangement, which platform in a transport situation between wind power plants can be reduced in size in such a way the whole arrangement can be transported on a trailer or on other suitable vehicle.

The telescopic beams are provided at each side of the platform and can be extended or retracted synchronously at both sides of the platform.

Hereby it is possible to move the platform along an axis in a radial direction of the tower without turning the platform.

The telescopic beams are provided at each side of the platform and can be extended or retracted independently at each sides of the platform.

Hereby it is possible to turn or rotate the platform in relation to a vertical axis by moving the telescopic beams over a distance in opposite directions or by moving the telescopic beams over a distance with different velocity, or even by moving one beam at a time.

In an embodiment, the lattice beams are provided with a square or rectangular cross section.

In an alternative embodiment, the lattice beams are provided with a triangular or trapezoidal cross section.

Hereby it is possible to provide strong telescopic beams and at the same time keep the weight low.

In an embodiment the pivot points in which the bar arrangement is connected to the tower guide means are positioned in a fixed distance to each other.

Hereby the ends of the telescopic beams is in a fixed distance in relation to each other.

In an embodiment the pivot points in which the bar arrangement is connected to the tower guide means are positioned in a variable distance to each other by means of a length adjustable connection bar.

This will give a further possibility of changing the shape or configuration of the platform in relation to a cross section of the blade.

Effects and features of the different embodiments are to a large extent analogous to those described above in connection with the first embodiment.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope defined by the appended claims.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1 shows a blade access arrangement in a position with a platform hanging in wires and supported by the tower;
Figure 2 shows a view from above of a cross section along the line II-II in figure 1;
Figure 3a - 3d shows an enlarged view of the part of the blade access arrangement in contact with the tower marked by the circle III in figure 2 illustrating different tower diameters;
Figure 4 shows the platform seen from above with the platform in a position close to the tower;
Figure 5 shows the platform seen from a side with the platform placed on a telescopic beam construction in a position close to the tower;
Figure 6 shows a view from above of a cross section along the line VI-VI in figure 5;
Figure 7 shows an end view of a cross section along the line VII-VII in figure 5;
Figure 8 shows an enlarged view of the rear part of the platform with a system for relative angular movement of the telescopic beams marked by the circle VIII in figure 7;
Figure 9 shows the platform seen from a side with the platform placed on the telescopic beam construction in an unextended position;
Figure 10 shows the platform seen from a side with the platform placed on the telescopic beam construction in an extended position;

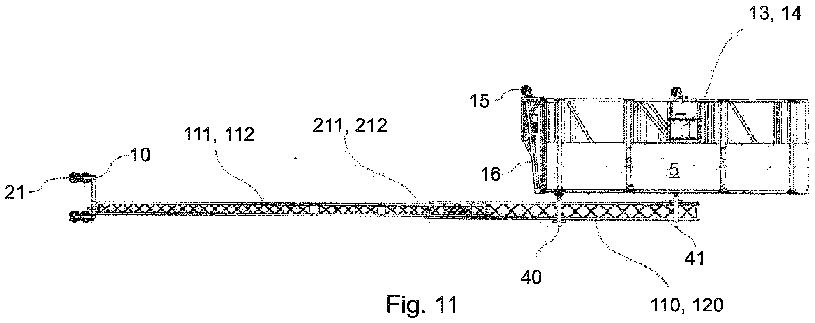

Figure 11 shows the platform seen from a side with the platform placed on the telescopic beam construction in a fully extended position;
Figure 12 shows the platform seen from above with the platform in a narrow configuration;
Figure 13 shows the telescopic beam construction when the platform is in a narrow configuration, without showing the platform;
Figure 14 shows an enlarged view of the rear part of the platform with a system for relative angular movement of the telescopic beams corresponding to the view in figure 8;
Figure 15 shows the platform seen from above with the platform in a wide configuration;
Figure 16 shows the telescopic beam construction when the platform is in a wide configuration, without showing the platform;
Figure 17 shows an enlarged view of the rear part of the platform with a system for relative angular movement of the telescopic beams corresponding to the view in figure 8;
Figure 18 shows the platform seen from above with the platform in a wider configuration;
Figure 19 shows the telescopic beam construction when the platform is in a wider configuration, without showing the platform; and
Figure 20 shows an enlarged view of the rear part of the platform with a system for relative angular movement of the telescopic beams corresponding to the view in figure 8.

### Detailed description

The present disclosure will now be described with reference to the accompanying drawings, in which preferred example embodiments of the disclosure are shown.

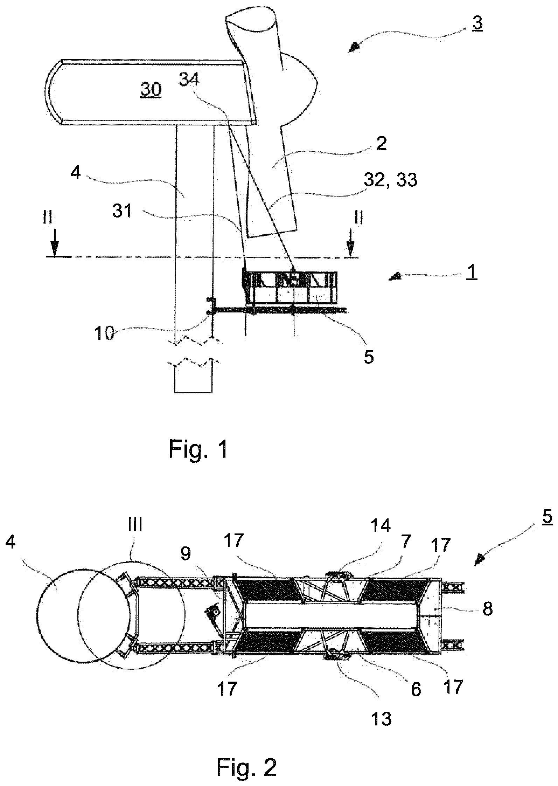

Figure 1 shows a blade access arrangement 1 for a rotor blade 2 of a wind power plant 3. The wind power plant 3 has a tower 4. A nacelle 30 is arranged on top of the tower 4. The blade 2 is fixed to a hub of a rotor which is rotatably supported in the nacelle 30, the rotor comprising a number of blades 2.

The blade access arrangement 1 comprises a platform 5, The platform 5 has sides extending from a front end to a back end of the platform 5 and is connected to tower guide means 10 which rest against the tower 4. The tower guide means 10 can be provided with rollers 21 so that the tower guide means 10 can guide the platform 5 along the tower 4. The tower guide means 10 are connected to the platform 5 by means of a bar arrangement 11, 12, which bar arrangement 11, 12 connects the platform 5 with the tower guiding means 10 and a hoisting arrangement for hoisting the blade access arrangement 1 up and down. The hoisting arrangement comprises a pair of hoisting means 13, 14 placed on each side 6, 7 of the platform 5. The hoisting arrangement 13, 14 comprises a further hoisting means 15, which is placed on a hoisting arm 16 at the back end of the platform 5 or placed on the back end of the platform 5. The hoisting arm 16 can be connected pivotably to the back end of the platform 5, the back end of the platform 5 being the end closest to the tower guide means 10.

The platform 5 comprises four sub-platforms 6, 7, 8, 9, where the sub-platform 8 further can be divided into two sub-platform parts for easy access of a wind turbine blade 2 into the center of the platform 5 by opening the platform 5 for encircling the blade 2.

The sub-platforms 6, 7, 8, 9 are connected by a plurality of spaced apart slats or lamellae hinged to the sub-platforms 6, 7, 8, 9 forming a decking 17. The number of slats in the decking 17 is adapted so that openings between slats are kept at a minimum preventing items to fall from the platform 5 when the platform 5 changes its shape or configuration during use.

When the platform 5 is in closed position an opening is provided in centre of the platform 5 through which opening a wind turbine blade 2 can extend.

Changing shape or configuration of the platform 5 can be done by use of actuators or like equipment positioned between sub-platforms 6, 7, 8, 9 or between sub-platforms 6, 7, 8, 9 and frames for the decking 17.

Hereby it is possible to follow the shape of the cross section of the blade 2.

An advantageous form or shape of each sub-platform 6, 7, 8, 9 can be a trapezoid.

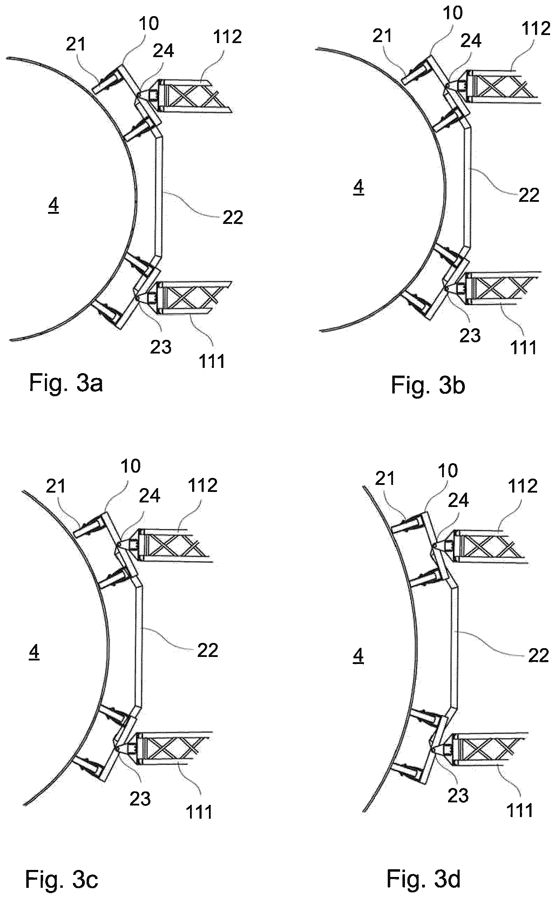

The tower guide means 10 is arranged in pairs in a distance from each other and configured to be distributed along a perimeter of the tower, for example as shown in Figures 3 - 6. Here the tower guide means 10 comprises a connection element 22 spacing the tower guide means 10 apart. Each of the tower guide means is provided with a pivot point 23, 24 to which a bar of the bar arrangement in shape of telescopic lattice beams 11, 12 is connected in a joint in such a way that the joint can pivot around an axis perpendicular to a plane parallel to a floor section of the platform 5.

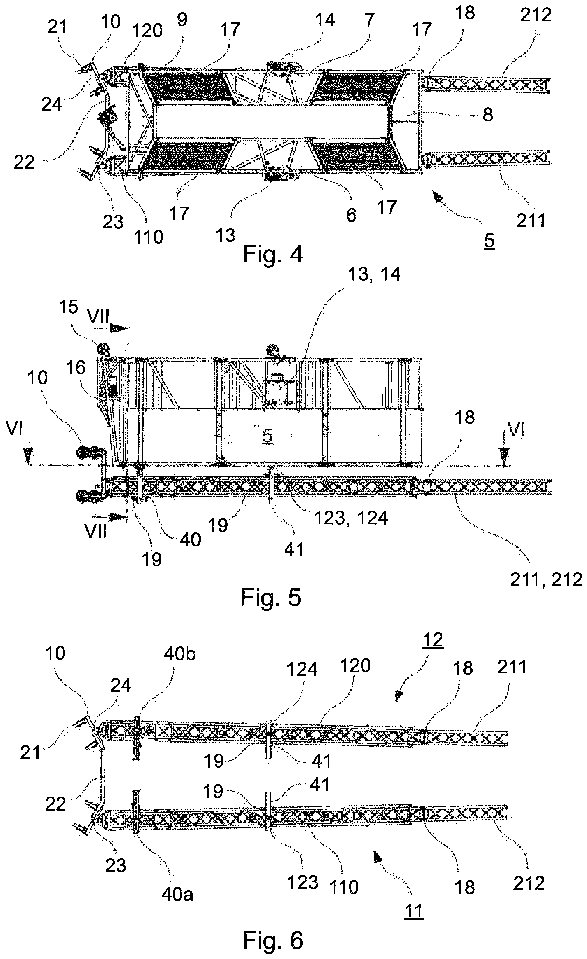

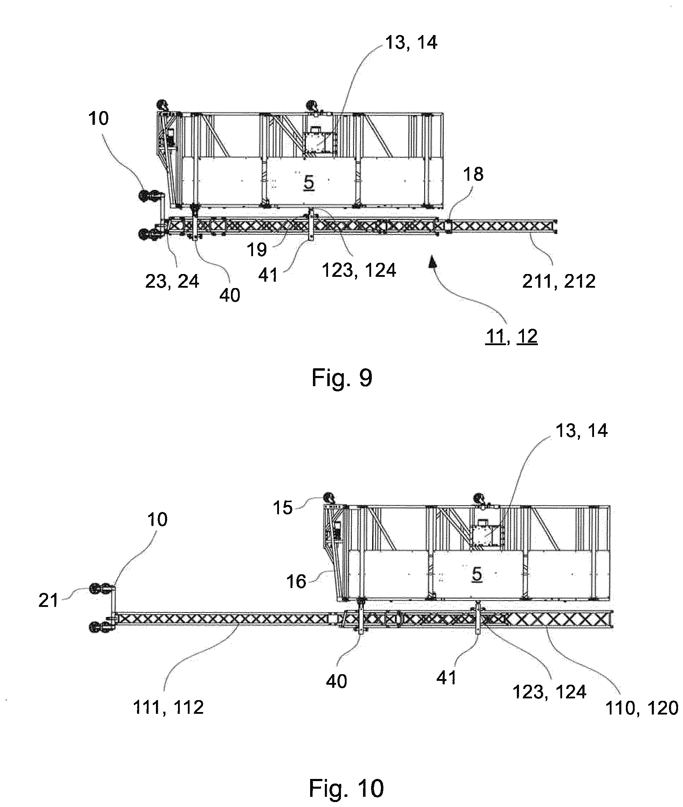

The telescopic lattice beams 11, 12 comprises outer beams 110, 120 and inner beams 111, 112 which inner beams is capable of being displaced inside and in a longitudinal direction of the outer beams 110, 120 as indicated for example in Figures 6, 7 and 9. The inner 111, 112, 211, 212 and outer 110, 120 beams are displaceable relative to each other in a lengthwise direction in order to perform a telescopic action. The outer and inner beams can be moved relative to each other by hydraulic or pneumatic cylinders, but since weight is an important factor other solutions such as a wire or belt drive in combination with a number of pulleys and one or more motors driving a pulley, wheel or capstan (not shown), can be suitable solutions.

Also the beams 11, 12 being lattice beams reduces the overall weight of the blade access arrangement 1. The beams 11, 12 can have a square or rectangular cross section.

In an alternative embodiment (not shown), the lattice beams 11, 12 can have a triangular or trapezoidal cross section.

A number of wheels, rollers or bushings (not shown) can be provided between the inner 111, 112, 211, 212 and outer 110, 120 beams in order to facilitate relative movement between the beams.

Between the platform 5 and the telescopic beams 11, 12 one or more pair of beam guides 40, 41 are provided. The beam guides 40, 41 allows the beams 11, 12 to be displaced in a crosswise direction in relation to a longitudinal direction of the beams 11, 12. One pair of beam guides 40 are provided at the sub-platform 9 end of the platform 5 pointing towards the tower 4 and a beam guide 41 is provided at each of the sub-platforms 6, 7 forming a middle part of the platform 5. The beam guides 40, 41 are also provided with wheels or rollers 19 to facilitate relative movement between the outer beams 110, 120 and the beam guides 40, 41 in a lengthwise direction in relation to the beams and in relation to the platform 5.

The beam guides 41 at the sub-platforms 6, 7 is connected to the sub-platforms 6, 7 each via a pivot point 123, 124.

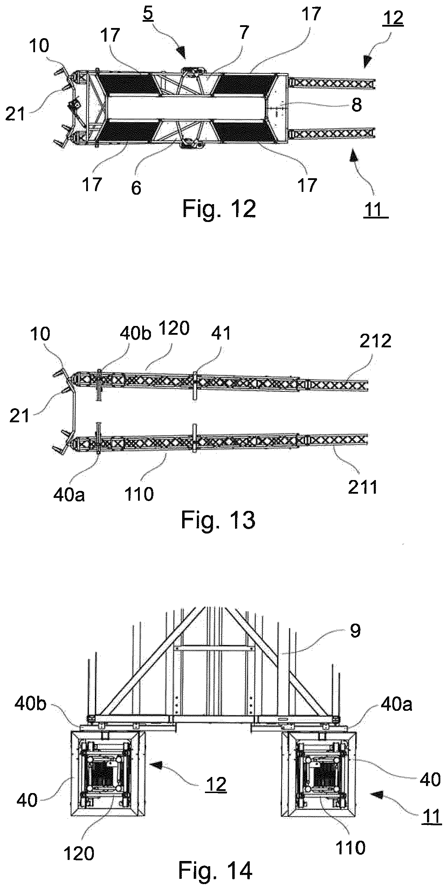

When the platform 5 changes shape as shown in figures 12 and 13, 15 and 16, 18 and 19 by moving two or more of the sub-platforms 6, 7, 8, 9 relative to each other by actuating means, the pivot points 123, 124 connecting the sub-platforms 6, 7 with the beam guides 41, a distance between the pivot points 123, 124 will change. A distance between the pivot points 23, 24 shown in Figures 3a-d, 4 and 6 connecting the telescopic beams 11, 12 with the tower guide 10 will remain the same.

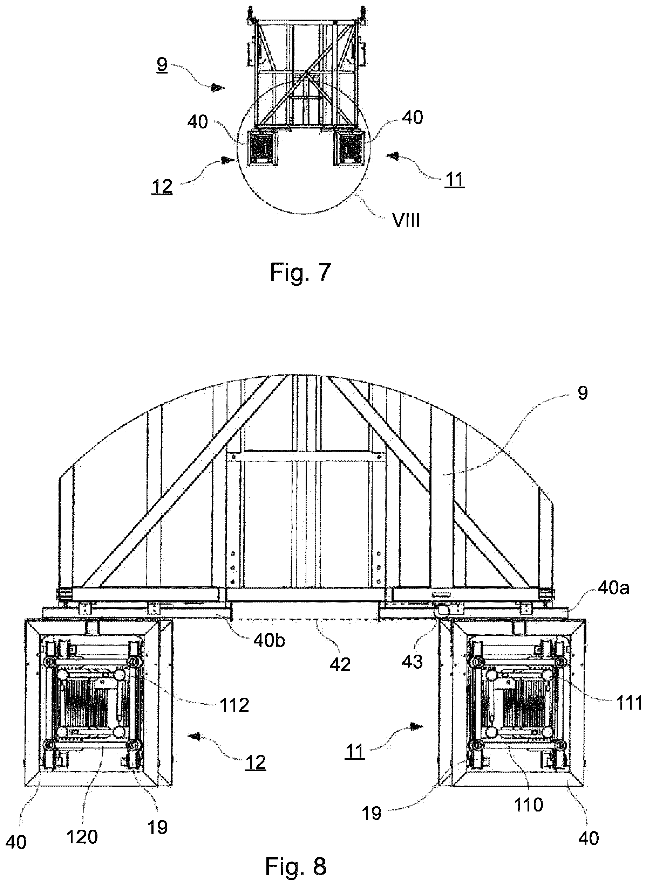

The beam guide 40 in the end of the platform 5 closest to the tower guide means 10 is constructed as displaceable connections 40a, 40b or sliding arms having a slidable connection to the platform, shown for example in Figures 8, 14, 17 and 20. When the platform changes shape or configuration, the sliding arms 40a, 40b will slide in a crosswise direction in relation to the lengthwise direction of the telescopic beams 11, 12. The sliding arms 40a, 40b is connected to each other by a drivetrain.

In an embodiment, as indicated in Figure 8, the drivetrain comprises a flexible member 42 being flexible around its longitudinal axis and a pulley 43. The flexible member 42 can be a wire a belt or another bendable element without substantial longitudinal elasticity.

The flexible member 42 is connected to ends of the sliding arms 40a, 40b pointing towards each other. When the flexible member 42 is led over the pulley 43 having an axis substantially perpendicular to the flexible member the result is that when one sliding arm 40a is moved away from a center line through the platform 5 running along and between the telescopic beams 11,12 the opposite sliding arm 40b will be forced to move in the opposite direction.

Between the sliding arms 40a, 40b can be provided a return spring (not shown) to bring the sliding arms 40a, 40b into a closer position when tension of the flexible member becomes smaller due to one of the arms 40a, 40b moving towards the center line again.

In alternative embodiments, the drivetrain can be one or more racks, belts, toothed belts, threaded spindles or combinations thereof.

Hereby is obtained a symmetric movement of the sliding arms causing a movement of the beams 11, 12 from a parallel position to a more open angle position, where free ends of the beams 11, 12 or extension beams 211, 212 achieves a greater distance between each other compared to the distance between the ends of the beams 11, 12 connected to the pivot points 23, 24.

Thereby the wire system 42 provides that movement of one telescopic beam 11 in relation to the platform 5, more precisely in relation to sub-platform 9, will be mirrored in the other telescopic beam 12 and vice versa.

Movement can be initiated by movement of the sub-platforms relative to each other.

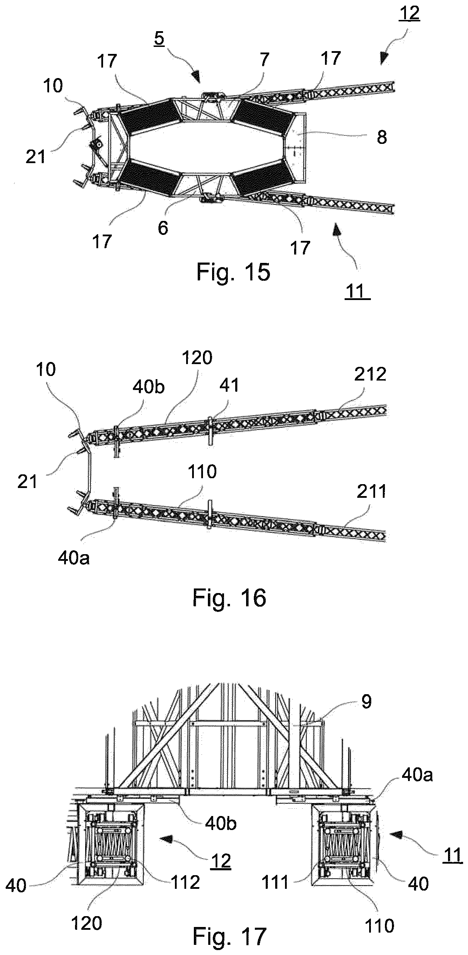

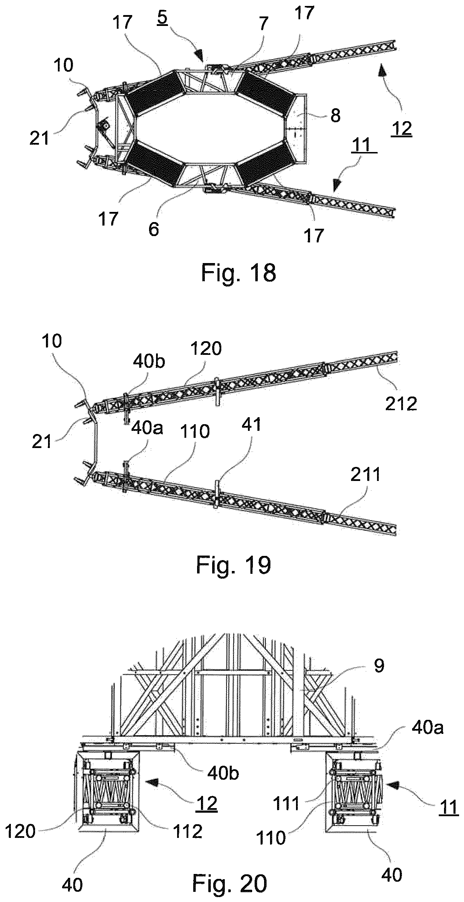

In an embodiment the bars 11, 12 can be angular displaced in relation to each other whereby the platform 5 changes its configuration from square-shaped or rectangular to another shape. Examples is shown in Figures 15 and 18.

In an embodiment, the drivetrain between the sliding arms 40a, 40b can be disabled. Hereby it is possible to turn the platform 5 around a wind turbine blade 2 going through the center opening of the platform 5 by extending one side of the telescopic beams at a time, moving the telescopic beams in opposite directions or by moving the telescopic beams with different speed or velocity (moving one beam 11 on one side of the platform 5 slower than the beam 12 at the other side of the platform 5 or vice versa).

In an embodiment, the connection element 22 can be adjustable in length to be able to further adjust the shape or configuration of the platform 5.

The person skilled in the art realizes that the present disclosure is not limited to the preferred embodiments described above. The person skilled in the art further realizes that modifications and variations are possible within the scope of the appended claims.

## Claims

1. Blade access arrangement (1) for a rotor blade (2) of a wind power plant (3) having a tower (4), the arrangement (1) comprising a platform (5) having a number of sub-platforms (6, 7, 8, 9) movably connected to each other by means of a connecting arrangement, tower guide means (10) arranged in pairs in a distance from each other and configured to be distributed along a perimeter of the tower (4) for guiding the platform (5) against the tower (4), a bar arrangement (11, 12) connecting the platform (5) with the tower guiding means (10) and a hoisting arrangement for hoisting the blade access arrangement (1) up and down, where each of the tower guide means (10) is provided with a pivot point (23, 24),
**characterized in that** the bar arrangement (11,12) is provided at each side of the platform (5), and **in that** to the pivot point (23,24) a bar of the bar arrangement (11, 12) in shape of telescopic lattice beams (11, 12) is at an end connected to the tower guide means (10) in a joint (23, 24) in such a way that the joint can pivot around an axis perpendicular to a plane parallel to a floor section of the platform (5), and **in that** in a distance from the end of the bar arrangement (11, 12), the bar arrangement (11,12) at each side of the platform (5) is connected to a sub-platform (6, 7) of the platform (5) by a further pivot point (123, 124) and that the bar arrangement (11, 12) at each side of the platform (5), is connected to another sub-platform (9) by a pair of displaceable connections (40a, 40b) capable of being displaced in a direction crosswise to a lengthwise direction of the bar arrangement (11, 12).

2. Blade access arrangement according to claim 1, **characterized in that** the displaceable connections (40a, 40b) are connected to each other by a drivetrain comprising a flexible member (42) being flexible around its longitudinal axis and a pulley (43).

3. Blade access arrangement according to any of the claims 1 or 2, **characterized in that** the bar arrangement (11, 12) consist of a pair of telescopic lattice beams comprising outer beams (110, 120) and inner beams (111, 112) which outer beams (110, 120) are capable of being displaced in beam guides (40, 41) in a longitudinal direction of the outer beams (110, 120) and in relation to the platform (5).

4. Blade access arrangement according to claim 3, **characterized in that** the telescopic beams (110,111,120,112) are provided at each side of the platform (5) and are connected to be extended or retracted synchronously at both sides of the platform (5).

5. Blade access arrangement according to claim 3, **characterized in that** the telescopic beams (110,111,120,112) are provided at each side of the platform (5) and are configured to be extended or retracted independently at each side of the platform (5).

6. Blade access arrangement according to any of the claims 1 to 5, **characterized in that** the inner beams (111, 112) capable of being displaced inside and in a longitudinal direction of the outer beams (110, 120), which inner beams (111, 112) at an end being the end pointing away from the tower guide (10), are provided with an extension beam (211, 212).

7. Blade access arrangement according to any of the claims 3-6, **characterized in that** the lattice beams (11, 12) is provided with a square or rectangular cross section.

8. Blade access arrangement according to any of the claims 3-6, **characterized in that** the lattice beams (11, 12) is provided with a triangular or trapezoidal cross section.

9. Blade access arrangement according to any of the claims 1 to 8, **characterized in that** the pivot points (23, 24) in which the bar arrangement (11, 12) is connected to the tower guide means (10) are positioned in a fixed distance to each other.

10. Blade access arrangement according to any of the claims 1 to 8, **characterized in that** the pivot points (23, 24) in which the bar arrangement (11, 12) is connected to the tower guide means (10) are positioned in a variable distance to each other by means of a length adjustable connection bar (22).

## Patentansprüche

1. Blattzugangsanordnung (1) für ein Rotorblatt (2) einer Windkraftanlage (3) mit einem Turm (4), wobei die Anordnung (1) eine Plattform (5) mit mehreren Unterplattformen (6, 7, 8, 9), die mittels einer Verbindungsanordnung beweglich miteinander verbunden sind, Turmführungseinrichtungen (10), die paarweise voneinander beabstandet angeordnet und dazu ausgelegt sind, entlang eines Umfangs des Turms (4) platziert zu sein, um die Plattform (5) am Turm (4) entlang zu führen, eine Stangenanordnung (11, 12), welche die Plattform (5) mit den Turmführungseinrichtungen (10) verbindet, und eine Hebeanordnung zum Anheben und Absenken der Blattzugangsanordnung (1), umfasst, wobei jede der Turmführungseinrichtungen (10) mit einem Drehpunkt (23, 24) versehen ist,
**dadurch gekennzeichnet, dass** die Stangenanordnung (11, 12) auf jeder Seite der Plattform (5) vorgesehen ist und dass der Drehpunkt (23, 24) einer Stange der Stangenanordnung (11, 12) in Form von Teleskopgitterträgern (11, 12) an einem Ende mit den Turmführungseinrichtungen (10) in einem Gelenk (23, 24) verbunden ist, sodass sich das Gelenk um eine Achse senkrecht zu einer Ebene parallel zu einem Bodenabschnitt der Plattform (5) verschwenken kann, und dadurch, dass die Stangenanordnung (11, 12) auf jeder Seite der Plattform (5) vom Ende der Stangenanordnung (11, 12) beabstandet über einen weiteren Drehpunkt (123, 124) mit einer Unterplattform (6, 7) der Plattform (5) verbunden ist und dass die Stangenanordnung (11, 12) auf jeder Seite der Plattform (5) durch ein Paar versetzbare Verbindungen (40a, 40b), die dazu funktionsfähig sind, in eine Richtung quer zu einer Längsrichtung der Stangenanordnung (11, 12) versetzbar zu sein, mit einer weiteren Unterplattform (9) verbunden ist.

2. Blattzugangsanordnung nach Anspruch 1, **dadurch gekennzeichnet, dass** die versetzbaren Verbindungen (40a, 40b) über einen Antriebsstrang miteinander verbunden sind, der ein flexibles Element (42) umfasst, das um seine Längsachse und eine Riemenscheibe (43) flexibel ist.

3. Blattzugangsanordnung nach einem der Ansprüche 1 oder 2, **dadurch gekennzeichnet, dass** die Stangenanordnung (11, 12) aus einem Paar Teleskopgitterträgern besteht, das äußere Träger (110, 120) und innere Träger (111, 112) umfasst, wobei die äußeren Träger (110, 120) dazu funktionsfähig sind, in Trägerführungen (40, 41) in eine Längsrichtung der äußeren Träger (110, 120) und in Bezug zur Plattform (5) versetzbar zu sein.

4. Blattzugangsanordnung nach Anspruch 3, **dadurch gekennzeichnet, dass** die Teleskopträger (110, 111, 120, 112) auf jeder Seite der Plattform (5) vorgesehen sind und verbunden sind, um auf beiden Seiten der Plattform (5) synchron ausgefahren oder eingefahren zu werden.

5. Blattzugangsanordnung nach Anspruch 3, **dadurch gekennzeichnet, dass** die Teleskopträger (110, 111, 120, 112) auf jeder Seite der Plattform (5) vorgesehen sind und dazu ausgelegt sind, auf allen Seiten der Plattform (5) unabhängig ausgefahren oder eingefahren zu werden.

6. Blattzugangsanordnung nach einem der Ansprüche 1 bis 5, **dadurch gekennzeichnet, dass** die inneren Träger (111, 112) dazu funktionsfähig sind, innerhalb und in eine Längsrichtung der äußeren Träger (110, 120) versetzbar zu sein, wobei die inneren Träger (111, 112) an dem von der Turmführung (10) weg zeigenden Ende mit einem Verlängerungsträger (211, 212) versehen sind.

7. Blattzugangsanordnung nach einem der Ansprüche 3-6, **dadurch gekennzeichnet, dass** die Gitterträger (11, 12) mit einem quadratischen oder rechteckigen Querschnitt versehen sind.

8. Blattzugangsanordnung nach einem der Ansprüche 3-6, **dadurch gekennzeichnet, dass** die Gitterträger (11, 12) mit einem dreieckigen oder trapezförmigen Querschnitt versehen sind.

9. Blattzugangsanordnung nach einem der Ansprüche 1 bis 8, **dadurch gekennzeichnet, dass** die Drehpunkte (23, 24), an denen die Stangenanordnung (11, 12) mit den Turmführungseinrichtungen (10) verbunden ist, in einem festen Abstand zueinander positioniert sind.

10. Blattzugangsanordnung nach einem der Ansprüche 1 bis 8, **dadurch gekennzeichnet, dass** die Drehpunkte (23, 24), an denen die Stangenanordnung (11, 12) mit den Turmführungseinrichtungen (10) verbunden ist, mittels einer längenverstellbaren Verbindungsstange (22) in einem variablen Abstand zueinander positioniert sind.

## Revendications

1. Agencement d'accès à une pale (1) destiné à une pale de rotor (2) d'une éolienne (3) ayant une tour (4), l'agencement (1) comprenant une plateforme (5) ayant un certain nombre de sous-plateformes (6, 7, 8, 9) reliées entre elles de manière mobile au moyen d'un agencement de liaison, des moyens de guidage de tour (10) disposés par paires à une certaine distance l'un de l'autre et conçus pour être distribués le long d'un périmètre de la tour (4) pour guider la plateforme (5) contre la tour (4), un agencement de barres (11, 12) reliant la plateforme (5) aux moyens de guidage de tour (10) et un agencement de levage destiné à soulever et abaisser l'agencement d'accès à une pale (1), chacun des moyens de guidage de tour (10) étant pourvu d'un point de pivotement (23, 24), **caractérisé en ce que** l'agencement de barres (11, 12) est situé de chaque côté de la plateforme (5), et **en ce que**, au point de pivotement (23, 24), une barre de l'agencement de barres (11, 12) en forme de poutres télescopiques en treillis (11, 12) est, à une extrémité, reliée aux moyens de guidage de tour (10) dans une articulation (23, 24) de sorte que l'articulation puisse pivoter autour d'un axe perpendiculaire à un plan parallèle à une section de plancher de la plateforme (5), et **en ce que**, à une certaine distance de l'extrémité de l'agencement de barres (11, 12), l'agencement de barres (11, 12) de chaque côté de la plateforme (5) est relié à une sous-plateforme (6, 7) de la plateforme (5) par un autre point de pivotement (123, 124) et **en ce que** l'agencement de barres (11, 12) de chaque côté de la plateforme (5) est relié à une autre sous-plateforme (9) par une paire de liaisons mobiles (40a, 40b) pouvant être déplacées dans une direction transversale par rapport à la direction longitudinale de l'agencement de barre (11, 12).

2. Agencement d'accès à une pale selon la revendication 1, **caractérisé en ce que** les liaisons mobiles (40a, 40b) sont reliées l'une à l'autre par une chaîne cinématique comprenant un élément souple (42) flexible autour de son axe longitudinal et une poulie (43).

3. Agencement d'accès à une pale selon l'une quelconque des revendications 1 ou 2, **caractérisé en ce que** l'agencement de barres (11, 12) consiste en une paire de poutres télescopiques en treillis comprenant des poutres extérieures (110, 120) et des poutres intérieures (111, 112), lesquelles poutres extérieures (110, 120) peuvent être déplacées dans des guides de poutres (40, 41) dans une direction longitudinale des poutres extérieures (110, 120) et par rapport à la plateforme (5).

4. Agencement d'accès à une pale selon la revendication 3, **caractérisé en ce que** les poutres télescopiques (110, 111, 120, 112) sont situées de chaque côté de la plateforme (5) et sont reliées pour être étendues ou rétractées de manière synchronisée des deux côtés de la plateforme (5).

5. Agencement d'accès à une pale selon la revendication 3, **caractérisé en ce que** les poutres télescopiques (110, 111, 120, 112) sont situées de chaque côté de la plateforme (5) et sont conçues pour être étendues ou rétractées indépendamment de chaque côté de la plateforme (5) .

6. Agencement d'accès à une pale selon l'une quelconque des revendications 1 à 5, **caractérisé en ce que** les poutres intérieures (111, 112) peuvent être déplacées à l'intérieur et dans une direction longitudinale des poutres extérieures (110, 120), lesquelles poutres intérieures (111, 112) au niveau d'une extrémité qui est l'extrémité dirigée à l'opposé du guide de tour (10), étant pourvues d'une poutre d'extension (211, 212).

7. Agencement d'accès à une pale selon l'une quelconque des revendications 3 à 6, **caractérisé en ce que** les poutres en treillis (11, 12) ont une section transversale carrée ou rectangulaire.

8. Agencement d'accès à une pale selon l'une quelconque des revendications 3 à 6, **caractérisé en ce que** les poutres en treillis (11, 12) ont une section triangulaire ou trapézoïdale.

9. Agencement d'accès à une pale selon l'une quelconque des revendications 1 à 8, **caractérisé en ce que** les points de pivotement (23, 24) dans lesquels l'agencement de barres (11, 12) est relié aux moyens de guidage de tour (10) sont positionnés à une distance fixe l'un par rapport à l'autre.

10. Agencement d'accès à une pale selon l'une quelconque des revendications 1 à 8, **caractérisé en ce que** les points de pivotement (23, 24) dans lesquels l'agencement de barres (11, 12) est relié aux moyens de guidage de tour (10) sont positionnés à une distance variable l'un de l'autre au moyen d'une barre de liaison réglable en longueur (22).
